# EUROPÄISCHE PATENTSCHRIFT

(11) **EP 3 782 727 B1**
(45) Veröffentlichungstag und Bekanntmachung des Hinweises auf die Patenterteilung: **07.10.2026**
(21) Anmeldenummer: 19192428.1
(22) Anmeldetag: 20.08.2019
(51) Int. Cl.: B01J 23/42, F01N 3/20, B01D 53/94, B01J 35/00, B01J 21/08, B01J 21/06, B01J 35/40, B01J 35/45, B01J 35/77, B01J 35/56

(54) **KATALYSATOR ZUR REDUZIERUNG VON AMMONIAK-EMISSIONEN**
AMMONIA EMISSIONS REDUCTION CATALYST
CATALYSEUR PERMETTANT DE RÉDUIRE LES ÉMISSIONS D'AMMONIAQUE

(43) Veröffentlichungstag der Anmeldung: 24.02.2021
(73) Patentinhaber: Umicore AG & Co. KG, 63457 Hanau-Wolfgang (DE)
(72) Erfinder: FRIEDRICH, Birgit, 64853 Otzberg (DE); KEITL, Gordon, 60389 Frankfurt (DE)

(56) Entgegenhaltungen:
- EP-A1- 1 547 682
- DE-A1- 102017 122 001
- JP-A- 2010 149 097
- JP-A- H09 103 651
- US-A1- 2003 185 736
- US-A1- 2009 011 177
- RYMES J ET AL: "Pt COMBUSTION CATAALYSTS PREPARED FROM W/O MICROEMULSIONS", SCIENTIFIC BASES FOR THE PREPARATION OF HETEROGENEOUS CATALYSTS : PROCEEDINGS OF THE 8TH INTERNATIONAL SYMPOSIUM, LOUVAIN-LA-NEUVE, BELGIUM, SEPTEMBER 9 - 12, 2002; [STUDIES IN SURFACE SCIENCE AND CATALYSIS], ELSEVIER BV, NL, vol. 143, 9 September 2002 (2002-09-09), pages 121 - 129, XP002672135, ISBN: 978-0-444-51178-2

## Beschreibung

An die Reinigung der Abgase von Kraftfahrzeugen werden immer strengere Anforderungen gestellt. Während Partikel durch Filtration entfernt werden können, müssen unvollständig verbrannte Kohlenwasserstoffe (HC), Kohlenmonoxid (CO) und Stickoxide (NOₓ) zu Wasser, Kohlenstoffdioxid und Stickstoff umgesetzt werden. Dies erfolgt über katalytisch aktive Feststoffe, welche in der Regel als Beschichtung auf Trägersubstraten aufgebracht sind.

US2009/0011177A1 zum Beispiel beschreibt platinhaltige Katalysatoren zur Behandlung von Motorabgasen, wobei auf einem Träger abgeschiedenes kolloidales Platin mit einer durchschnittlichen Partikelgröße von 80 - 120 nm Anwendung für Oxidationskatalysatoren findet.

Als Trägersubstrate für diese Katalysatoren können sowohl Durchfluss- als auch Filtersubstrate verwendet werden. Durchflusssubstrate sind dem Fachmann bekannt und am Markt erhältlich. Sie bestehen beispielsweise aus Cordierit, Aluminium-Titanat oder Metallfolie.

Auch können als Durchflusssubstrate sogenannte ,corrugated substrates' verwendet werden. Diese sind dem Fachmann als Substrate aus gewellten Blättern, welche aus inerten Materialien bestehen, bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige hitzebeständige Materialien aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern glatte Blätter angeordnet sein.

Metallene Trägersubstrate bestehen in der Regel aus Strukturen aus gewellten Blechen, in die auch glatte Blechlagen eingearbeitet sein können. In der Regel werden diese Bleche gewickelt, so dass sich Kanalstrukturen bilden, deren Kanäle parallel verlaufen und sich von einem Ende des Substrates bis zum anderen Ende erstrecken. Die Bleche können durchgehend oder mit Löchern versehen sein, um den Gasaustausch zwischen den Kanälen zu ermöglichen. Zudem können diese Blechstrukturen so geformt sein, dass potentielle Partikelemissionen von der Struktur aufgefangen werden (sog. "offene" Filtersubstrate).

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen und die durch poröse Wände getrennt sind. Sie bestehen beispielsweise aus Silicium-Carbid, Aluminium-Titanat oder Cordierit.

Wandflussfilter weisen im unbeschichteten Zustand Porositäten von beispielsweise 30 bis 80%, insbesondere 50 bis 75% auf. Ihre durchschnittliche Porengröße beträgt im unbeschichteten Zustand beispielsweise 5 bis 30 Mikrometer.

In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Bei mager betriebenen Motoren ist der Umsatz von HC und CO über Oxidationskatalysatoren möglich, die Reduktion von NOx zu Stickstoff jedoch nicht. Hierzu ist entweder der Einsatz von NOx-Speicherkatalysatoren erforderlich, oder die Verwendung von sogenannten SCR-Katalysatoren zwecks selektiver katalytischer Reduktion (SCR). Während NOx-Speicherkatalysatoren periodisch regeneriert werden müssen, ist dies bei SCR-Katalysatoren nicht erforderlich.

Jedoch erfordert die Verwendung von SCR-Katalysatoren die Zudosierung von Reduktionsmittel. Gängige Praxis ist die Einspritzung einer wässrigen Lösung von Harnstoff in den Abgasstrang vor dem SCR-Katalysator. Bei Temperaturen oberhalb von 175°C bildet sich durch Hydrolyse Ammoniak und CO₂:

(NH₂)₂CO + H₂O → 2 NH₃ + CO₂

Das gebildete Ammoniak wiederum dient als Reduktionsmittel für die Reduktion der Stickoxide über den SCR-Katalysator zu Stickstoff:

x NH₃ + y NOₓ (+ O₂) → ½ (x+y) N₂ + 3x/2 H₂O

Besonders schnell läuft die Reaktion bei einem Verhältnis NO/NO₂ ≈ 1 ab:

2 NH₃ + NO + NO₂ → 2 N₂ + 3 H₂O

Um einen möglichst vollständigen Umsatz der Stickoxide zu erreichen, wird der Harnstoff leicht überdosiert. Dies wiederum führt zu nicht umgesetztem Ammoniak im Abgas, was aufgrund seiner toxischen Wirkung unerwünscht ist und weshalb Ammoniakemissionen zunehmend in der Abgasgesetzgebung limitiert werden.

Aus diesem Grunde werden sogenannte "Ammoniak-Schlupf-Katalysatoren" (ASC) eingesetzt, die über dem SCR-Katalysator nicht umgesetztes Ammoniak umsetzen. Dabei wird das Ammoniak zu Stickstoff oxidiert:

4 NH₃ + 3 O₂ → 2 N₂ + 6 H₂O

Die für die Ammoniak-Oxidation aktiven Katalysatorbestandteile werden im Folgenden AMOX genannt.

Im Vergleich zu Palladium- und Rhodiumkatalysatoren zeigen Platinkatalysatoren die höchste Ammoniak-Oxidationsaktivität (Hansen T.K. (2017). Kgs. Lyngby: Technical Univ. of Denmark (DTU)).

Als Trägermaterial für das Edelmetall wird für die AMOX-Komponente in der Regel Aluminiumoxid (Al₂O₃) verwendet, da dies eine ausgezeichnete thermische Stabilität aufweist. Allerdings weisen herkömmliche Al₂O₃-geträgerte AMOX-Katalysatoren eine unzureichende Selektivität für die Oxidation zu Stickstoff (N₂) auf. Als unerwünschte Nebenreaktionen kommt es zur Oxidation von Ammoniak zu NOₓ und N₂O. Dies ist selbstverständlich kontraproduktiv für die Reduzierung der Stickoxide. Zudem ist N₂O auch problematisch aufgrund seiner Wirkung als Treibhausgas.

Um die Selektivität zu erhöhen, wird obiger AMOX-Katalysator auch mit SCR-aktiven Katalysatorzusammensetzungen kombiniert (WO2016/205506A1, US2008/292519A1, US2014/212350A1, US2014/0157763A1, US2015/037233A1,). Auch andere Edelmetallzusammensetzungen wurden hierfür bereits beschrieben (DE102017122001A1). Diese SCR-aktiven Zusammensetzungen können auf die AMOX-Katalysatorschicht, mit dem AMOX-Katalysator gemischt in einer Schicht, oder sowohl gemischt in einer Schicht als auch zusätzlich in einer oberen Schicht aufgebracht werden. Diese Kombinationen erlauben, durch nachfolgende Reduktion von NOₓ die Selektivität des Katalysators zu N₂ zu erhöhen, und stellen als Gesamtheit den Ammoniak-Schlupf-Katalysatoren (ASC) dar.

Allerdings ist die N₂O-Reduktion über dem Platin-Katalysator vernachlässigbar gering. Die N₂O-Bildung muss deshalb möglichst gering gehalten werden.

Aufgabe dieser Erfindung ist es deshalb, einen Platin-Katalysator bereitzustellen, der sowohl eine hohe Aktivität für die Ammoniakoxidation, aber auch eine gute Selektivität für die Oxidation zu Stickstoff aufweist und die schädlichen Nebenprodukte minimiert.

Die Erfindung betrifft einen Katalysator, welcher sowohl eine überraschend niedrige Light-Off-Temperatur für die Ammoniakoxidation, als auch eine hohe Selektivität zur Oxidation zu N₂ aufweist.

Im Folgenden wird die Erfindung im Detail beschrieben:
Die Erfindung betrifft einen Katalysator wie in Anspruch 1 definiert.

Der,durchschnittlicher Partikeldurchmesser' ist im Rahmen dieser Erfindung der durchschnittliche Durchmesser der Pt-Kristallite, welcher aus Röntgenbeugungsaufnahmen anhand des [111]-Hauptreflexes bei ca. 39,8° 2Theta über die Peakbreite (Full Width at Half Maximum; FWHM) berechnet wird. Hierbei wird als Standard Silizium mit einem Peak bei 28,4° 2Theta und einer FWHM von 0,06° 2Theta verwendet.

In einer Ausführungsvariante enthält der Katalysator kein Edelmetall außer Platin.

Bei einer bevorzugten Ausführungsform beinhaltet das Titanoxid, welches zum überwiegenden Teil als Titandioxid vorliegt, die kristallinen Phasen Anatas und Rutil. Die Phasen Anatas und Rutil liegen bevorzugt in einem Verhältnis größer als 9:1 vor.

Die Platinbeladung des Metalloxids A liegt insbesondere im Bereich von 0,5 - 20 Gewichts-%, bevorzugt 3 - 8 Gewichts-%, bezogen auf das Metalloxid A.

Die Temperaturstabilität des Metalloxids A kann durch Dotierung mit Siliziumoxid erhöht werden, wobei bevorzugt ein Siliziumoxidgehalt von 1 - 10 Gewichts-% im Metalloxid A verwendet wird.

In einer Ausführungsform wird das mit Platin geträgerte Metalloxid A mit einem weiteren Metalloxid, Metalloxid B, gemischt. Dabei kann Metalloxid B von Metalloxid A verschieden sein. So kann zum Beispiel als Metalloxid A Titanoxid verwendet werden und als Metalloxid B Aluminiumoxid. Bevorzugt handelt es sich bei Metalloxid A und Metalloxid B jedoch um das gleiche Metalloxid, wobei Metalloxid B in einer Ausführungsform Edelmetall trägt, beispielsweise Platin, Palladium und/oder Rhodium, und in einer anderen Ausführungsform kein Edelmetall trägt.

Zudem beinhaltet die Erfindung ein Verfahren zur Herstellung des erfindungsgemäßen Katalysators mit auf Metalloxid A geträgerten Platinpartikeln, wobei das Platin aus einer Lösung auf dem Metalloxid A abgeschieden und anschließend nach Trocknung einer thermischen Behandlung bei 700°C bis 900°C unterzogen und damit das Platin auf dem Metalloxid fixiert wird.

In einer Ausführungsvariante des erfindungsgemäßen Katalysators ist die Zusammensetzung mit auf Metalloxid A geträgertem Platin über mindestens 80% der Gesamtlänge des Trägersubstrats aufgebracht.

In einer weiteren Ausführungsvariante des erfindungsgemäßen Katalysators ist die Zusammensetzung mit auf Metalloxid A geträgertem Platin über 10% bis 80% der Gesamtlänge des Trägersubstrats aufgetragen und ermöglicht damit den Aufbau eines zonierten Katalysators.

Das für die oben genannten Katalysatoren verwendete Trägersubstrat kann aus Keramik oder aus Metall sein. Hierbei kann es sich um ein Durchflusssubstrat handeln. Auch ein sogenanntes ,corrugated substrate' kann als Trägersubstrat Verwendung finden. Auch Filtersubstrate können verwendet werden.

Die Erfindung beinhaltet ebenfalls ein Katalysatorsystem, wobei der erfindungsgemäße Katalysator verwendet wird.

Die Erfindung umfasst auch ein Verfahren zur Verminderung von Stickoxiden in Abgasen von mager betriebenen Verbrennungsmotoren, wobei das Abgas über ein Abgassystem geleitet wird, welches einen Katalysator zur selektiven Reduktion von Stickoxiden (SCR) sowie einen dem Abgasstrom folgend nachgeordneten Ammoniak-Schlupf-Katalysator (ASC) beinhaltet, wobei es sich bei dem ASC um den erfindungsgemäßen Katalysator handelt

Dabei kann es sich bei dem SCR-Katalysator um einen Vanadiumoxid-basierten Katalysator oder einen Zeolith-basierten Katalysator des Typs Fe-Zeolith oder Cu-Zeolith handeln.

Zeolithe sind zwei- oder drei-dimensionale Strukturen, deren kleinste Substrukturen als SiO₄ und AlO₄-Tetraeder betrachtet werden können. Diese Tetraeder bilden größere Strukturen, wobei zwei jeweils über ein Sauerstoffatom miteinander verbunden sind. So können unterschiedlich große Ringstrukturen gebildet werden, wie z.B. Ringstrukturen aus 4, 6, oder sogar neun tetraedrisch koordinierte Si- oder Al-Atome. Die unterschiedlichen Zeolithtypen werden oft über die größte Ringgröße definiert, da diese Größe bestimmt, welche Gastmoleküle die Zeolithstruktur penetrieren können. Üblicherweise wird zwischen großporigen Zeolithen mit bis zu 12 Tetraedern Ringgröße, mittelgroßporigen Zeolithen mit bis zu 10 Tetraedern Ringgröße und kleinporigen Zeolithen mit bis zu 8 Tetraedern Ringgröße unterschieden. Die Zeolithe werden durch die ,Structural Commission of the International Zeolite Association' in Strukturtypen eingeteilt, welche durch Codes aus drei Buchstaben angegeben werden.

Für den erfindungsgemäßen Katalysator können sowohl groß- als auch mittel- oder kleinporige Zeolithe verwendet werden. Beispiele geeigneter Zeolithe gehören den Strukturtypen ABW, AEI, AFX, BEA, CHA, DDR, ERI, ESV, FAU, FER, KFI, LEV, LTA, MER MFI, MWW, SOD oder STT an. Bevorzugt wird ein kleinporiger Zeolith des Strukturtyps AEI, AFX, CHA oder LEV. Besonders bevorzugt wird ein Zeolith des Strukturtyps CHA. Es wird ein Si : Al-Verhältnis von 2 bis 100, besonders bevorzugt von 5 : 50, und weiterhin bevorzugt von 10 : 40 verwendet.

Im Rahmen der vorliegenden Erfindung umfasst der Begriff ,Zeolith' auch Molekularsiebe, welche gelegentlich als ,Zeolith-ähnliche Strukturen' bezeichnet werden. Es werden bevorzugt Molekularsiebe der oben genannten Strukturtypen verwendet. Beispiele beinhalten Silizium-Aluminium-Phosphat-Zeolithe, welche auch als SAPO bezeichnet werden, und Aluminium-Phosphat-Zeolithe, welche als AlPO bekannt sind.

Die Beschichtung der Trägersubstrate kann nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der zu beschichtenden Materialien klein genug sein, um in die Poren des Wandflussfilters einzudringen.

Zonierte Katalysatoren können unterschiedlich ausgebildet sein. Beispielsweise kann sich eine Zone, mit der Zusammensetzung mit auf Metalloxid A geträgertem Platin versehen oder gemischt mit einer anderen katalytisch aktiven Zusammensetzung, von einem Ende (A) des Substrates her über die Länge L_{A} = 20% bis 80% der gesamten Substratlänge L erstrecken, während sich von dem anderen Ende (B) des Substrates eine weitere Zone über L_{B} = 20% bis 80% der Substratlänge L erstreckt. Dabei können sich die Zonen überlappen, sich berühren, oder mit Lücke ausgeführt sein. Beispielsweise kann über die Länge Lₐ die Zusammensetzung mit auf Metalloxid A geträgertem Platin aufgebracht sein, während über L_{b} eine SCR-Beschichtung aufgebracht ist. Bei Überlappung kann die Zone der Länge L_{b} sich über die Zone Lₐ erstrecken und somit die nachfolgende Reduktion von NOₓ zu N₂, wie zuvor beschrieben, übernehmen. In letzterem Fall kann L_{b} auch identisch mit der Länge des Substrates gewählt werden.

Bei Verwendung eines Wandflussfilters ist ebenso eine Beschichtung der Eingangskanäle mit einer SCR-aktiven Beschichtung, und eine Beschichtung der Auslasskanäle mit einer ASC-Beschichtung möglich, wobei als AMOX-aktive Komponente der ASC-Beschichtung die Zusammensetzung mit auf Metalloxid A geträgertem Platin hervorragend geeignet ist. Dabei kann zusätzlich eine Zonierung über die Länge des Substrates Verwendung finden.

Die Zusammensetzung mit auf Metalloxid A geträgertem Platin eignet sich in hervorragender Weise für die Verwendung als Ammoniak-Oxidationskatalysator in einem System zur Verminderung von Stickoxiden in Abgasen von mager betriebenen Verbrennungsmotoren. Ein solches System beinhaltend einen Katalysator zur selektiven Reduktion von Stickoxiden (SCR) sowie einen dem Abgasstrom folgend nachgeordneten Ammoniak-Schlupf-Katalysator (ASC), wobei der ASC das erfindungsgemäße Pulver bzw. Pulvergemisch mit AMOX-Katalysatorfunktion beinhaltet.

Der SCR-Katalysator hierfür kann prinzipiell aus allen für die SCR-Reaktion von Stickoxiden mit Ammoniak aktiven Katalysatoren ausgewählt werden, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetall-ausgetauschten Zeolithen.

Die im Folgenden beschriebenen AMOX-Katalysatoren stellen nicht einen Teil der Erfindung dar, sondern sollen das Verständnis der Erfindung erleichtern.

Beispiel K1Das Platin wird aus wässriger Lösung von Tetraethylammoniumhexahydoxoplatinat (EP 3 210 989 B1) durch Zugabe von verdünnter Salpetersäure auf das Titanoxidpulver, welches mit 5 Gewichts-% Siliziumoxid stabilisiert ist, gefällt, um ein Material mit einer Konzentration von 3 Gewichts-% Pt (bezogen auf das Titanoxidpulver) zu erhalten. Anschließend wird das so hergestellte Pulver abfiltriert, getrocknet und bei 800°C für 2h unter Luftatmosphäre fixiert.

Zur Herstellung eines Katalysators wird das Pulver in Wasser aufgeschlämmt und durch Zusatz von unbeschichtetem Titanoxid die gewünschte Beladung von 0,14 Gewichts-% Pt (bezogen auf das gesamte Titanoxidpulver) eingestellt. Mit diesem Washcoat wird ein handelsübliches keramisches Durchflusssubstrat mit der Zelligkeit von 400 cpsi und 110 µm Wandstärke in üblicher Weise beschichtet. Sodann wird das beschichtete Substrat bei 110°C getrocknet und für 6 Stunden bei 600°C kalziniert. Die Washcoat-Beladung des Katalysators beträgt 25 g/l, die Platinbeladung des Katalysators beträgt 0,0353 g/l.

### Vergleichsbeispiel VK1

Als Vergleichsreferenz wird ein Katalysator gleichen Platingehalts mit γ-Aluminiumoxid als Trägerpulver verwendet.

Das Platin wird aus wässriger Lösung von Tetraethylammoniumhexahydoxoplatinat durch Zugabe von verdünnter Salpetersäure auf das Trägerpulver gefällt. Als Trägerpulver wird γ-Aluminiumoxid verwendet. Anschließend wird der so hergestellte Washcoat in üblicher Weise auf ein handelsübliches Durchflusssubstrat beschichtet. Sodann wird das beschichtete Substrat bei 110°C getrocknet und für 6 Stunden bei 600°C kalziniert. Die Washcoat-Beladung des Katalysators beträgt 25 g/l.

Zur Vermessung wurden aus den fertigen Katalysatoren Bohrkerne mit einem Durchmesser von 25,4 mm und der Länge von 76,2 mm entnommen. Diese Bohrkerne wurde auf einer Modellgasanlage vermessen, wobei die Gaszusammensetzung und Raumgeschwindigkeit wie in Tabelle 1 angegeben gewählt wird.

**Tabelle 1**

| | Konzentration |
|---|---|
| GHSV [1/h] | 100000 |
| O₂ [Vol.-%] | 5 |
| H₂O [Vol.-%] | 5 |
| NH₃ [ppm] | 300 |
| N₂ | Restmenge |

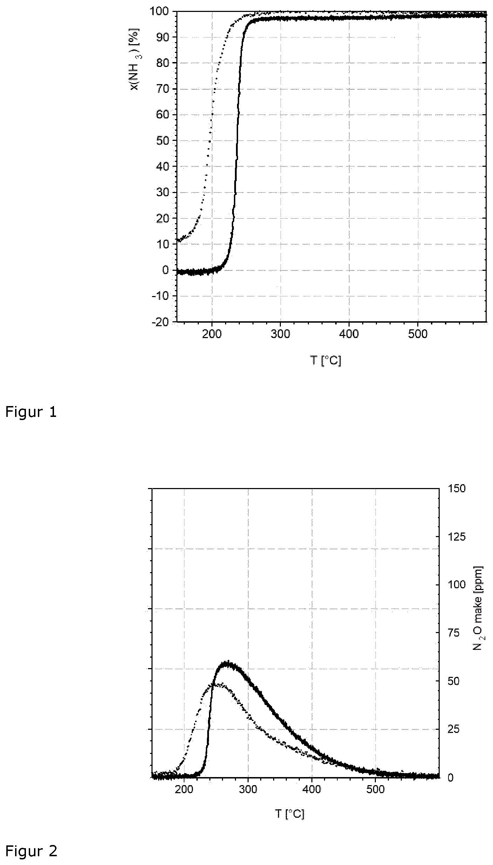

Die Ergebnisse sind vergleichend in Figuren 1 und 2 dargestellt.

Figur 1 zeigt die Umsatzkurve als Funktion der Temperatur für K1 (gepunktete Linie) und das Vergleichsbeispiel VK1 (durchgezogene Linie). Wie zu erkennen ist, weist K1 einen signifikant früheren Light-Off auf. Während K1 eine Konvertierung von 50% bereits bei 197°C erreicht, gelingt dies unter Verwendung von VK1 erst bei 237°C. Zudem wird mit K1 bereits bei 150°C ein Umsatz von 10% erreicht, während mit VK1 bei dieser Temperatur noch kein Umsatz beobachtet werden kann.

Figur 2 zeigt die Selektivität zu N₂O für die beiden Katalysatoren. Auch hier ist das Ergebnis für K1 gepunktet und für VK1 mit durchgezogener Linie dargestellt. Es wird deutlich, dass K1 eine geringere Selektivität zu N₂O als der Referenzkatalysator aufweist. Die maximal gemessene N₂O-Konzentration im Abgas nach ASC war für K1 47 ppm, was einer Selektivität von 34% entsprach, und für VK1 60 ppm, was einer Selektivität von 44% entsprach.

Des Weiteren wurde K1 auf die Größe seiner Platinpartikel hin vermessen. Hierfür wurden Röntgenbeugungsaufnahmen erstellt und anhand des [111]-Hauptreflexes bei ca. 39,8° die durchschnittliche Partikelgröße über die Peakbreite (FWHM) berechnet. Auf diese Weise wurde ein durchschnittlicher Partikeldurchmesser von 100 nm bestimmt.

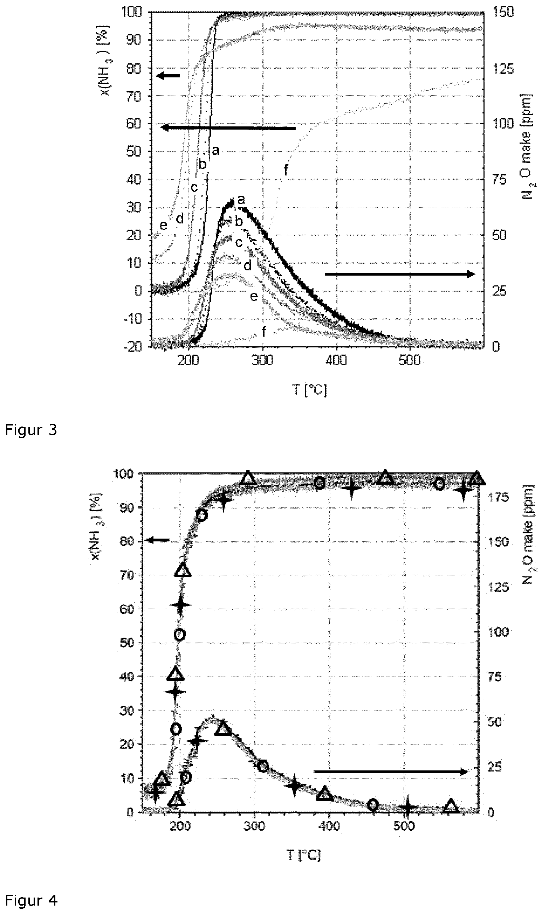

Der Einfluss der Alterungstemperatur wurde ebenfalls untersucht. Figur 3 zeigt den Ammoniak-Umsatz über Katalysator K1 frisch (a), und nach Alterung des Katalysators unter reduzierender Atmosphäre (10% O₂, 10% H₂O, Rest Stickstoff) bei 650°C (b), 700°C (c), 800°C (d), 900°C (e) und 1000°C (f). Die Alterungsdauer betrug 16 h mit Ausnahme der Alterung bei 650°C, bei der sie 12 h betrug. Wie zu erkennen ist, führt eine höhere Alterungstemperatur zu geringerer Selektivität zu N₂O und zu einer Absenkung der Light-Off-Temperatur für die Ammoniak-Konvertierung, bis bei 900°C der Maximalumsatz von Ammoniak sinkt und ab 1000°C die katalytische Aktivität stark beeinträchtigt wird. Der Bereich um 800°C kann deshalb als bevorzugter Temperaturbereich für eine thermische Vorbehandlung angesehen werden.

Der Einfluss der Mischung des Platin beinhaltenden Metalloxids mit Edelmetall freiem Metalloxid wurde mithilfe der Katalysatoren K2 - K4 untersucht, und wird im Folgenden geschildert.

### Beispiel K2

Das Platin wird aus wässriger Lösung von Tetraethylammoniumhexahydoxoplatinat (EP 3 210 989 B1) durch Zugabe von verdünnter Salpetersäure auf das Titanoxidpulver, welches mit 5 Gewichts-% Siliziumoxid stabilisiert ist, gefällt, um ein Material mit einer Konzentration von 3 Gewichts-% Pt, bezogen auf das Titanoxidpulver, zu erhalten. Anschließend wird das so hergestellte Pulver abfiltriert, getrocknet und bei 800°C für 2h unter Luftatmosphäre fixiert.

Zur Herstellung der Katalysatoren wird das Pulver in Wasser aufgeschlämmt und durch Zusatz von unbeschichtetem Titanoxid die gewünschte Beladung von 0,4 Gewichts-% Pt (bezogen auf das gesamte Titanoxidpulver) eingestellt. Mit diesem Washcoat wird ein handelsübliches keramisches Durchflusssubstrat mit der Zelligkeit 400 cpsi, 110 µm Wandstärke in üblicher Weise beschichtet. Sodann wird das beschichtete Substrat bei 110°C getrocknet und für 6 Stunden bei 600°C kalziniert. Die Washcoat-Beladung des Katalysators beträgt 25 g/l, die Platinbeladung des Katalysators beträgt 0,1059 g/l.

### Beispiel K3

Die Herstellung des Katalysators erfolgt identisch zu K2, wobei jedoch bei der Fällung des Platins aus der wässrigen Lösung auf das Titanoxidpulver ein Material mit einer Konzentration von 4 Gewichts-% Pt, bezogen auf das Titanoxidpulver, hergestellt wird.

### Beispiel K4

Die Herstellung des Katalysators erfolgt identisch zu K2, wobei jedoch bei der Fällung des Platins aus der wässrigen Lösung auf das Titanoxidpulver ein Material mit einer Konzentration von 8 Gewichts-% Pt, bezogen auf das Titanoxidpulver, hergestellt wird.

Die Katalysatoren K2, K3 und K4 werden für 16h bei 800°C gealtert unter reduzierenden Bedingungen (10% O₂, 10% H₂O, Rest Stickstoff) wird der Ammoniak-Umsatz sowie die N₂O- und NO-Konzentration nach Katalysator gemessen.

In Figur 4 sind die Ergebnisse der Beispiele K2 (Kreis), K3 (Dreieck) und K4 (Stern) vergleichend dargestellt. Wie zu ersehen ist, sind die katalytischen Eigenschaften nahezu identisch, wobei eine höhere Pt-Beladung des Titanoxidpulvers die Menge des zu verarbeitenden Pulvers und damit auch die Fertigungskosten senkt. Eine Pulvermischung, hergestellt durch Mischen von Pthaltigem Pulver mit Pt-freiem Pulver, ist deshalb eine bevorzugte Variante für den erfindungsgemäßen Katalysator.

## Patentansprüche

1. Katalysator umfassend eine Zusammensetzung mit auf Metalloxid A geträgertem Platin in Form von Platinpartikeln, wobei die Platinpartikel einen durchschnittlichen Partikeldurchmesser von 80-120 nm aufweisen und der durchschnittliche Partikeldurchmesser der Platinpartikel aus Röntgenbeugungsaufnahmen anhand des [111]-Hauptreflexes bei ca. 39.8° 2Theta über die Peakbreite (FWHM) berechnet und als Standard Silizium mit einem Peak bei 28,4° 2Theta und einer FWHM von 0,06° 2Theta verwendet wird, **dadurch gekennzeichnet, dass** es sich bei Metalloxid A um Titanoxid handelt und die Zusammensetzung mit einer für die SCR-Reaktion aktiven Zusammensetzung entweder zusammen oder in unterschiedlichen Zonen und/oder Schichten auf ein Trägersubstrat der Länge L aufgebracht ist.

2. Katalysator gemäß Anspruch 1, **dadurch gekennzeichnet, dass** die Zusammensetzung mit auf Metalloxid A geträgertem Platin außer Platin kein weiteres Edelmetall enthält.

3. Katalysator gemäß Anspruch 1 oder 2, **dadurch gekennzeichnet, dass** das Titanoxid die kristallinen Phasen Anatas und Rutil umfasst und das Mengenverhältnis Anatas zu Rutil größer als 9:1 ist.

4. Katalysator gemäß einem oder mehreren der Ansprüche 1 bis 3, **dadurch gekennzeichnet, dass** die Platinbeladung 0,5 - 20 Gewichts-% bezogen auf das Metalloxid A beträgt.

5. Katalysator gemäß Anspruch 4, **dadurch gekennzeichnet, dass** die Platinbeladung 3 - 8 Gewichts-% bezogen auf das Metalloxid A beträgt.

6. Katalysator gemäß einem oder mehreren der Ansprüche 1 bis 5, **dadurch gekennzeichnet, dass** das Metalloxid A Siliziumoxid enthält, wobei der Siliziumoxidanteil im Metalloxid A bevorzugt 1 bis 10 Gewichts-% beträgt.

7. Katalysator gemäß einem oder mehreren der Ansprüche 1 bis 6, **dadurch gekennzeichnet, dass** der Katalysator Metalloxid B umfasst, wobei es bevorzugt ist, dass Metalloxid B gleich Metalloxid A ist.

8. Katalysator gemäß einem oder mehreren der Ansprüche 1 bis 7, **dadurch gekennzeichnet, dass** die Zusammensetzung mit auf Metalloxid A geträgertem Platin auf ein Trägersubstrat über mindestens 80% der gesamten Länge L aufgebracht ist.

9. Katalysator gemäß Anspruch 1 bis 7, **dadurch gekennzeichnet, dass** die Zusammensetzung mit auf Metalloxid A geträgertem Platin auf ein Trägersubstrat auf einer Länge von 10% bis 80% der Trägersubstratlänge L aufgebracht ist.

10. Katalysator gemäß einem oder mehreren der Ansprüche 1 bis 9, **dadurch gekennzeichnet, dass** es sich bei dem Trägersubstrat um ein keramisches oder metallenes Substrat handelt.

11. Katalysator gemäß einem oder mehreren der Ansprüche 1 bis 10, **dadurch gekennzeichnet, dass** es sich bei dem Trägersubstrat um ein Durchflusssubstrat handelt.

12. Katalysator gemäß ³ Anspruch 11, **dadurch gekennzeichnet, dass** es sich bei dem Durchflusssubstrat um ein ,corrugated substrate' handelt.

13. Katalysator gemäß einem oder mehreren der Ansprüche 1 bis 10, **dadurch gekennzeichnet, dass** es sich bei dem Trägersubstrat um ein Filtersubstrat handelt.

14. Verfahren zur Herstellung eines Katalysators gemäß einem oder mehreren der Ansprüche 1 bis 6, **dadurch gekennzeichnet, dass** das Platin aus einer Lösung auf dem Metalloxid A abgeschieden und die Zusammensetzung mit auf Metalloxid A geträgertem Platin nach Trocknung einer thermischen Behandlung bei 700°C bis 900°C unterzogen wird.

15. Katalysatorsystem, **dadurch gekennzeichnet, dass** es einen erfindungsgemäßen Katalysator gemäß einem oder mehreren der Ansprüche 1 bis 13 umfasst.

16. Verfahren zur Verminderung von Stickoxiden in Abgasen von mager betriebenen Verbrennungsmotoren, wobei das Abgas über ein Abgassystem geleitet wird, welches einen Katalysator zur selektiven Reduktion von Stickoxiden (SCR) sowie einen dem Abgasstrom folgend nachgeordneten Ammoniak-Schlupf-Katalysator (ASC) beinhaltet, **dadurch gekennzeichnet, dass** es sich bei dem ASC um einen erfindungsgemäßen Katalysator gemäß einem oder mehreren der Ansprüche 1 bis 13 handelt.

17. Verfahren gemäß Anspruch 16, **dadurch gekennzeichnet, dass** es sich bei dem SCR-Katalysator um einen Vanadiumoxid-basierten Katalysator oder einen Zeolith-basierten Katalysator des Typs Fe-Zeolith oder Cu-Zeolith handelt.

## Claims

1. Catalyst comprising a composition containing platinum supported on metal oxide A in the form of platinum particles, the platinum particles having an average particle diameter of 80-120 nm and the average particle diameter of the platinum particles being calculated from X-ray diffraction images based on the [111] main reflection at approximately 39.8° 2Theta over the peak width (FWHM) and silicon with a peak at 28.4° 2Theta and an FWHM of 0.06° 2Theta being used as standard, **characterized in that** metal oxide A is titanium oxide and the composition is applied, with a composition that is active for the SCR reaction, to a support substrate of length L either together or in different zones and/or layers.

2. Catalyst according to claim 1, **characterized in that** the composition containing platinum supported on metal oxide A contains no other precious metal besides platinum.

3. Catalyst according to claim 1 or 2, **characterized in that** the titanium oxide comprises the crystalline phases anatase and rutile, and the anatase to rutile ratio is greater than 9:1.

4. Catalyst according to one or more of claims 1 to 3, **characterized in that** the platinum loading is 0.5 - 20 wt.% based on the metal oxide A.

5. Catalyst according to claim 4, **characterized in that** the platinum loading is 3 - 8 wt.% based on the metal oxide A.

6. Catalyst according to one or more of claims 1 to 5, **characterized in that** the metal oxide A contains silicon oxide, the proportion of silicon oxide in the metal oxide A being preferably 1 to 10 wt.%.

7. Catalyst according to one or more of claims 1 to 6, **characterized in that** the catalyst comprises metal oxide B, it being preferred that metal oxide B is the same as metal oxide A.

8. Catalyst according to one or more of claims 1 to 7, **characterized in that** the composition containing platinum supported on metal oxide A is applied to a support substrate over at least 80% of the total length L.

9. Catalyst according to claim 1 to 7, **characterized in that** the composition containing platinum supported on metal oxide A is applied to a support substrate over a length of 10% to 80% of the support substrate length L.

10. Catalyst according to one or more of claims 1 to 9, **characterized in that** the support substrate is a ceramic or metallic substrate.

11. Catalyst according to one or more of claims 1 to 10, **characterized in that** the support substrate is a through-flow substrate.

12. Catalyst according to claim 11, **characterized in that** the through-flow substrate is a corrugated substrate.

13. Catalyst according to one or more of claims 1 to 10, **characterized in that** the support substrate is a filter substrate.

14. Method for producing a catalyst according to one or more of claims 1 to 6, **characterized in that** the platinum is deposited from a solution on the metal oxide A and the composition containing platinum supported on metal oxide A is subjected to a thermal treatment at 700 °C to 900 °C after drying.

15. Catalyst system, **characterized in that** it comprises a catalyst according to the invention in accordance with one or more of claims 1 to 13.

16. Method for reducing nitrogen oxides in exhaust gases of lean-burn internal combustion engines, the exhaust gas being passed over an exhaust gas system that comprises a catalyst for the selective reduction of nitrogen oxides (SCR) and an ammonia slip catalyst (ASC) downstream of the exhaust gas stream, **characterized in that** the ASC is a catalyst according to the invention in accordance with one or more of claims 1 to 13.

17. Method according to claim 16, **characterized in that** the SCR catalyst is a vanadium oxide-based catalyst or a zeolite-based catalyst of the Fe-zeolite or Cuzeolite type.

## Revendications

1. Catalyseur comprenant une composition comportant du platine supporté sur un oxyde métallique A sous forme de particules de platine, dans lequel les particules de platine présentent un diamètre de particule moyen allant de 80 à 120 nm et le diamètre de particule moyen des particules de platine est calculé à partir d'images de diffraction de rayons X à l'aide du reflet principal [111] à environ 39,8° 2theta au-dessus de la largeur de pic (FWHM), et en utilisant comme étalon du silicium avec un pic à 28,4° 2theta et une FWHM de 0,06° 2theta,
**caractérisé en ce que** l'oxyde métallique A est de l'oxyde de titane et la composition est déposée avec une composition active pour la réaction SCR, soit conjointement, soit dans des zones et/ou des couches distinctes, sur un substrat de support de longueur L.

2. Catalyseur selon la revendication 1, **caractérisé en ce que** la composition comportant du platine supporté sur un oxyde métallique A ne contient aucun autre métal précieux que le platine.

3. Catalyseur selon la revendication 1 ou 2, **caractérisé en ce que** l'oxyde de titane comprend les phases cristallines anatase et rutile et le rapport quantitatif entre l'anatase et le rutile est supérieur à 9:1.

4. Catalyseur selon une ou plusieurs des revendications 1 à 3,
**caractérisé en ce que** la charge en platine est de 0,5 à 20 % en poids par rapport à l'oxyde métallique A.

5. Catalyseur selon la revendication 4, **caractérisé en ce que** la charge en platine est de 3 à 8 % en poids par rapport à l'oxyde métallique A.

6. Catalyseur selon l'une ou plusieurs des revendications 1 à 5, **caractérisé en ce que** l'oxyde métallique A contient de l'oxyde de silicium, dans lequel la teneur en oxyde de silicium dans l'oxyde métallique A est de préférence de 1 à 10 % en poids.

7. Catalyseur selon l'une ou plusieurs des revendications 1 à 6, **caractérisé en ce que** le catalyseur comprend un oxyde métallique B, dans lequel il est préférable que l'oxyde métallique B soit identique à l'oxyde métallique A.

8. Catalyseur selon une ou plusieurs des revendications 1 à 7,
**caractérisé en ce que** la composition comportant du platine supporté sur un oxyde métallique A est déposée sur un substrat de support sur au moins 80 % de la longueur L totale.

9. Catalyseur selon les revendications 1 à 7, **caractérisé en ce que** la composition comportant du platine supporté sur un oxyde métallique A est déposée sur un substrat de support sur une longueur de 10 % à 80 % de la longueur L de substrat de support.

10. Catalyseur selon l'une ou plusieurs des revendications 1 à 9, **caractérisé en ce que** le substrat de support est un substrat céramique ou métallique.

11. Catalyseur selon l'une ou plusieurs des revendications 1 à 10, **caractérisé en ce que** le substrat de support est un substrat d'écoulement.

12. Catalyseur selon la revendication 11, **caractérisé en ce que** le substrat d'écoulement est un « substrat ondulé ».

13. Catalyseur selon l'une ou plusieurs des revendications 1 à 10, **caractérisé en ce que** le substrat de support est un substrat de filtrage.

14. Procédé de fabrication d'un catalyseur selon l'une ou plusieurs des revendications 1 à 6, **caractérisé en ce que** le platine est déposé à partir d'une solution sur l'oxyde métallique A et la composition comportant du platine supporté sur un oxyde métallique A est soumise, après séchage, à un traitement thermique allant de 700 °C à 900 °C.

15. Système catalytique, **caractérisé en ce qu'**il comprend un catalyseur selon l'invention, selon l'une ou plusieurs des revendications 1 à 13.

16. Procédé pour la réduction d'oxydes d'azote dans des gaz d'échappement de moteurs à combustion interne à fonctionnement en mode pauvre, dans lequel les gaz d'échappement sont acheminés par l'intermédiaire d'un système d'échappement qui contient un catalyseur pour la réduction sélective d'oxydes d'azote (SCR) ainsi qu'un catalyseur à glissement d'ammoniac (ASC) disposé en aval du flux de gaz d'échappement, **caractérisé en ce que** l'ASC est un catalyseur selon l'invention, selon l'une ou plusieurs des revendications 1 à 13.

17. Procédé selon la revendication 16, **caractérisé en ce que** le catalyseur SCR est un catalyseur à base d'oxyde de vanadium ou un catalyseur à base de zéolite de type Fe-zéolite ou Cu-zéolite.
